# EUROPEAN PATENT APPLICATION

(11) **EP 4 418 744 A1**
(43) Date of publication of application: **21.08.2024**
(21) Application number: 22880296.3
(22) Date of filing: 11.10.2022
(51) Int. Cl.: H04W 48/16

(54) **INFORMATION PROCESSING METHOD AND APPARATUS, DEVICE AND READABLE STORAGE MEDIUM**

(30) Priority: 11.10.2021 CN 202111183999
(71) Applicant: China Mobile Communication Co., Ltd Research Institute, Beijing 100053 (CN); China Mobile Communications Group Co., Ltd., Beijing 100032 (CN)
(72) Inventor: WANG, Dan, Beijing 100032 (CN); HAN, Yan, Beijing 100032 (CN); SUN, Tao, Beijing 100032 (CN)
(74) Representative: Gunzelmann, Rainer
(86) International application number: PCT/CN2022/124611
(87) International publication number: WO 2023/061359

(57) **Abstract**

An information processing method and device, a device, and a readable storage medium are provided. The method includes: receiving first information sent by a base station and sending second information to the base station, or directly sending second information to a base station; wherein the first information includes at least one of following: network slice identification information, network slice selection assistance information, single network slice selection assistance information, broadcast indication or information of supporting a network slice group by the base station; the second information includes at least one of following: network slice identification information, network slice selection assistance information, single network slice selection assistance information, network slice group information, a network slice group identifier.

## Description

### CROSS-REFERENCE TO RELATED APPLICATION

This application claims the priority of Chinese Patent Application No. 202111183999.4 filed on October 11, 2021, the disclosure of which is incorporated herein by reference in its entirety.

### TECHNICAL FIELD

Embodiments of the present disclosure relate to the technical field of communications, and in particular, to an information processing method, an information processing device, apparatus, and a readable storage medium.

### BACKGROUND

At present, a terminal is in an idle state or a non-connected state may randomly select a frequency to camp, and once the terminal wakes up and attempts to access, if the frequency is not a frequency commonly used by the terminal, subsequent cell reselection in a connected state may be caused, resulting in waste of signaling.

### SUMMARY

Embodiments of the present disclosure provide an information processing method, an information processing device, a device, and a readable storage medium, to solve the problem of how to reduce the possibility of cell reselection and save signaling overheads.

In a first aspect, an information processing method performed by a network function is provided. The method includes: receiving first information sent by a base station and sending second information to the base station, or directly sending second information to a base station; wherein the first information includes at least one of following: network slice identification information, network slice selection assistance information, single network slice selection assistance information, broadcast indication or information of supporting a network slice group by the base station; the second information includes at least one of following: network slice identification information, network slice selection assistance information, single network slice selection assistance information, network slice group information, a network slice group identifier.

Optionally, the network function includes at least one of following: an access and mobility management function, a unified data management function, a network slice access control function.

Optionally, the method further includes determining the second information according to one or more of following: a network slice capability supported by the network function, network slice information configured by the network function, network slice group information configured by the network function.

Optionally, directly sending the second information to the base station includes: in a case that network configuration changes, directly sending the second information to the base station, wherein the second information is used to update configuration of the base station.

Optionally, the method further includes: determining correspondence between a network slice group identifier and network slice identification information; sending the correspondence between the network slice group identifier and the network slice identification information to the base station.

Optionally, determining the correspondence between the network slice group identifier and the network slice identification information includes: determining the correspondence between the network slice group identifier and the network slice identification information according to a network slice capability supported by the network function and a capability of a network slice supported by the base station.

In a second aspect, an information processing method performed by a base station is provided. The method includes sending first information to a network function and receiving second information from the network function; or receiving second information directly from a network function; wherein the first information includes at least one of following: network slice identification information, network slice selection assistance information, single network slice selection assistance information, broadcast indication or information of supporting a network slice group by a base station; the second information includes at least one of following: network slice identification information, network slice selection assistance information, single network slice selection assistance information, network slice group information, a network slice group identifier.

Optionally, the method includes: receiving, from the network function, correspondence between a network slice group identifier and network slice identification information.

Optionally, the network function includes at least one of following: an access and mobility management function, a unified data management function, a network slice access control function.

Optionally, the method further includes: broadcasting slice group identification information according to the second information, wherein the slice group identification information is used to assist the terminal in camping on an appropriate frequency band or a suitable network slice.

In a third aspect, an information processing method performed by a network function. The method includes: receiving third information sent by a terminal and sending fourth information to the terminal; or directly sending fourth information to the terminal; wherein the third information includes at least one of following: broadcast indication or information of supporting a network slice group by the terminal, network slice identification information, network slice selection assistance information, single network slice selection assistance information, indication or information of supporting a slice priority by the terminal; the fourth information includes at least one of following: network slice identification information, network slice selection assistance information, single network slice selection assistance information, network slice group information, a network slice group identifier, network slice priority information.

Optionally, the third information is information used to access a network or handover request information or configuration update information.

Optionally, directly sending the fourth information to the terminal includes: directly sending fourth information to the terminal when network configuration changes, or a position of the terminal changes, or subscription data changes, where the fourth information is used to update configuration of the terminal.

Optionally, receiving the third information sent by the terminal includes: receiving, via a base station, the third information sent by the terminal.

Optionally, the method further includes: determining the fourth information according to one or more of following: information of a network slice subscribed by the network function, information of a network slice allowed to be accessed by the network function, second information, slice information configured by the network function, slice group information of the network function; wherein the second information includes at least one of following: network slice identification information, network slice selection assistance information, single network slice selection assistance information, network slice group information, a network slice group identifier.

Optionally, the method further includes: determining correspondence between a network slice group identifier and network slice identification information corresponding to the terminal; and sending, to the terminal, the correspondence between the network slice group identifier and the network slice identification information corresponding to the terminal.

Optionally, determining the correspondence between the network slice group identifier and the network slice identification information corresponding to the terminal includes: determining, according to the correspondence between the network slice group identifier and the network slice identification information determined by the network function and network slice capability supported by the terminal, the correspondence between the network slice group identifier and the network slice identification information corresponding to the terminal; wherein the correspondence between the network slice group identifier and the network slice identification information determined by the network function is determined by the network function based on network slice capability supported by the network function and network slice capability supported by the base station.

Optionally, the network function includes at least one of following: an access and mobility management function, a unified data management function, a network slice access control function.

In a fourth aspect, an information processing method performed by a terminal is provided. The method includes: sending third information to a network function and receiving fourth information from the network function; or directly receiving fourth information from a network function, wherein the third information includes at least one of following: broadcast indication or information of supporting a network slice group by the terminal, network slice identification information, network slice selection assistance information, single network slice selection assistance information, indication or information of a slice priority supported by the terminal; the fourth information includes at least one of following: network slice identification information, network slice selection assistance information, single network slice selection assistance information, network slice group information, a network slice group identifier, network slice priority information.

Optionally, the third information further includes pre-configured slice priority information.

Optionally, the third information is information used to access a network or handover request information or configuration update information.

Optionally, the method further includes: receiving, from the network function, correspondence between a network slice group identifier and network slice identification information corresponding to the terminal.

Optionally, the network function includes at least one of following: an access and mobility management function, a unified data management function, a network slice access control function.

Optionally, the method further includes: after receiving fourth information from the network function, updating a slice priority preconfigured for the terminal, or subsequently selecting a network slice with a high priority to access a corresponding network.

In a fifth aspect, an information processing device performed by a network function is provided. The device includes: a first transceiving module 1001 configured to receive first information sent by a base station and send second information to the base station; or directly send second information to a base station; wherein the first information includes at least one of following: network slice identification information, network slice selection assistance information, single network slice selection assistance information, broadcast indication or information of supporting a network slice group by the base station; the second information includes at least one of following: network slice identification information, network slice selection assistance information, single network slice selection assistance information, network slice group information, a network slice group identifier.

In a sixth aspect, an information processing device applied to a base station is provided. The device includes: a second transceiving module, configured to send first information to a network function and receive second information from the network function; or receive the second information directly from a network function; wherein the first information includes at least one of following: network slice identification information, network slice selection assistance information, single network slice selection assistance information, broadcast indication or information of supporting a network slice group by a base station; the second information includes at least one of following: network slice identification information, network slice selection assistance information, single network slice selection assistance information, network slice group information, a network slice group identifier.

In a seventh aspect, an information processing device applied to a network function is provided. The device includes: a third transceiving module, configured to receive third information sent by a terminal and send fourth information to the terminal; or directly send fourth information to the terminal; wherein the third information includes at least one of following: broadcast indication or information of supporting a network slice group by the terminal, network slice identification information, network slice selection assistance information, single network slice selection assistance information, indication or information of supporting a slice priority by the terminal; the fourth information includes at least one of following: network slice identification information, network slice selection assistance information, single network slice selection assistance information, network slice group information, a network slice group identifier, network slice priority information.

In an eighth aspect, an information processing device applied to a terminal is provided. The device includes: a fourth transceiving module, configured to send third information to a network function and receive fourth information from the network function; or directly receive fourth information from a network function; wherein the third information includes at least one of following: broadcast indication or information of supporting a network slice group by the terminal, network slice identification information, network slice selection assistance information, single network slice selection assistance information, indication or information of a slice priority supported by the terminal; the fourth information includes at least one of following: network slice identification information, network slice selection assistance information, single network slice selection assistance information, network slice group information, a network slice group identifier, network slice priority information.

In a ninth aspect, a communications device is provided. The device includes: a processor, a memory, and a program stored in the memory and executable on the processor, wherein the program, when executed by the processor, implements the steps of the method according to the first aspect, the second aspect, the third aspect or the fourth aspect.

In a tenth aspect, a readable storage medium having a program stored thereon, wherein the program, when executed by a processor, implements the steps of the method according to the first aspect, the second aspect, the third aspect or the fourth aspect.

In the embodiments of the present disclosure, the network function may confirm the slice identification information and the slice group information broadcast by the base station, and configure to the terminal the slice identification information and the slice group information confirmed by the network function. When the terminal subscribes a network slice or the terminal is allowed to access the network slice, the network function confirms the slice priority configured for the terminal and sends the slice priority to the terminal. After the foregoing information is configured to the terminal, the terminal may effectively monitor the broadcast of the base station and reside in an appropriate frequency or a frequency where a suitable slice exists in an idle state or a non-connected state, thereby reducing the possibility of cell reselection, and saving signaling.

### BRIEF DESCRIPTION OF THE DRAWINGS

Various other advantages and benefits will become apparent to those of ordinary skill in the art upon reading the following detailed description of the preferred embodiments. The drawings are only for the purpose of illustrating the preferred embodiments and are not considered to be limiting of the present disclosure. Moreover, throughout the drawings, the same reference symbols are used to refer to the same components. In the drawings:
FIG. 1 is a first flowchart of an information processing method according to some embodiments of the present disclosure;
FIG. 2 is a second flowchart of an information processing method according to some embodiments of the present disclosure;
FIG. 3 is a third flowchart of an information processing method according to some embodiments of the present disclosure;
FIG. 4 is a third flowchart of an information processing method according to some embodiments of the present disclosure;
FIG. 5 is a fourth flowchart of an information processing method according to some embodiments of the present disclosure;
FIG. 6 is a fifth flowchart of an information processing method according to some embodiments of the present disclosure
FIG. 7 is a sixth flowchart of an information processing method according to some embodiments of the present disclosure;
FIG. 8 is a flowchart of Embodiment 1 in the present disclosure;
FIG. 9 is a flowchart of Embodiment 2 in the present disclosure;
FIG. 10 is a first schematic diagram of an information processing device according to some embodiments of the present disclosure;
FIG. 11 is a second schematic diagram of an information processing device according to some embodiments of the present disclosure;
FIG. 12 is a third schematic diagram of an information processing device according to some embodiments of the present disclosure;
FIG. 13 is a third schematic diagram of an information processing device according to some embodiments of the present disclosure;
FIG. 14 is a schematic diagram of a terminal according to some embodiments of the present disclosure;
FIG. 15 is a schematic diagram of a network side device according to some embodiments of the present disclosure;
FIG. 16 is a schematic diagram of a communication device according to some embodiments of the present disclosure.

### DETAILED DESCRIPTION

The technical solutions in the embodiments of the present disclosure will be clearly and completely described below with reference to the accompanying drawings in the embodiments of the present disclosure. It is obvious that the described embodiments are some, rather than all, of the embodiments of the present disclosure. All other embodiments obtained by a person of ordinary skill in the art based on the embodiments of the present disclosure without creative efforts shall fall within the protection scope of the present disclosure.

The terms "comprising" and any variations thereof in the specification and claims of the present disclosure are intended to cover non-exclusive inclusion, for example, processes, methods, systems, products, or devices that include a series of steps or units are not necessarily limited to those steps or units clearly listed, but may include other steps or units not expressly listed or inherent to these processes, methods, products, or devices. In addition, the description and claims use "and/or" to refer to at least one of the connected objects, such as A and/or B, indicating that there are three cases including A alone, B alone, and both A and B.

In the embodiments of the present disclosure, words such as "exemplary" or "for example" are used to represent giving an example, an illustration, or a description. Any embodiment or design scheme described as "exemplary" or "for example" in the embodiments of the present disclosure should not be construed as being more preferred or advantageous than other embodiments or designs. Exactly, use of the word such as "exemplary" or "for example" is intended to present related concepts in a specific manner.

It should be noted that the technology described in the embodiments of the present disclosure is not limited to a Long Term Evolution (LTE)/LTE-Advanced (LTE-A) system, and may also be used in other wireless communication systems, such as Code Division Multiple Access (CDMA), Time Division Multiple Access (TDMA), Frequency Division Multiple Access (FDMA), Orthogonal Frequency Division Multiple Access (OFDMA), Single-Carrier Frequency-Division Multiple Access (SC-FDMA), and other systems. The terms "system" and "network" in the embodiments of the present disclosure are often used interchangeably, and the described techniques may be used for both the systems and radio technologies mentioned above, as well as other systems and radio technologies. However, the following description describes a New Radio (NR) system for example purposes, and NR terminology is used in much of the description below, although these techniques may also be applied to applications other than NR system applications, such as the 6th Generation (6G) communication system.

At present, the terminal in an idle state or a non-connected state may randomly select a frequency selected to camp, and once the terminal wakes up and attempts to access, if the frequency is not a frequency frequently used by the terminal, subsequent cell reselection in a connected state may be caused, resulting in a waste of signaling. In view of the above problems, the related art provides a method for broadcasting slice information by a base station, and a method for configuring a slice priority for a terminal. However, these technologies are only limited to requiring the base station to broadcast the slice information or the base station considers correspondence between slice priority and a frequency, but lack consistency for the end-to-end slice design. Because the terminal, the base station and the core network need consistent support for slice capability, the slice priority configured by the terminal and the slice information broadcast by the base station are consistent with the capability of the core network, and are consistent with subscription information of the terminal. These are not considered in the relevant art.

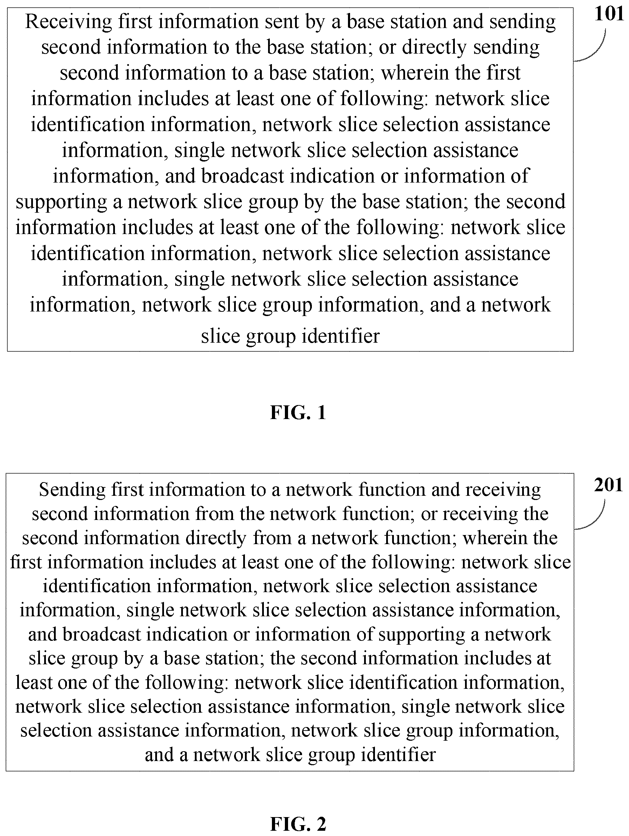

Referring to FIG. 1, an embodiment of the present disclosure provides an information processing method, where an entity performing the method includes a network function (or is described as a core network function). The method includes a step 101.

Step 101: receiving first information sent by a base station and sending second information to the base station; or directly sending second information to a base station; wherein the first information includes at least one of following: network slice identification information, network slice selection assistance information, single network slice selection assistance information, and broadcast indication or information of supporting a network slice group by the base station; the second information includes at least one of the following: network slice identification information, network slice selection assistance information, single network slice selection assistance information, network slice group information, and a network slice group identifier.

In this way, supporting the slice capability by both the network function and the base station should be consistent.

In an implementation of the present disclosure, the network function includes at least one of the following: an access and mobility management function, a unified data management function, and a network slice access control function.

In an implementation of the present disclosure, the method further includes:
determining the second information according to one or more of a network slice capability supported by the network function, network slice information configured by the network function, and network slice group information configured by the network function.

In an embodiment of the present disclosure, the directly sending the second information to the base station includes:
when network configuration changes, directly sending the second information to the base station, wherein the second information is used to update configuration of the base station.

In an implementation of the present disclosure, the method further includes:
determining correspondence between a network slice group identifier and network slice identification information; and
sending the correspondence between the network slice group identifier and the network slice identification information to the base station.

In an implementation of the present disclosure, determining the correspondence between the network slice group identifier and the network slice identification information includes:
determining the correspondence between the network slice group identifier and the network slice identification information according to the network slice capability supported by the network function and the capability of the network slice supported by the base station.

In an implementation of the present disclosure, the method further includes:
receiving third information sent by the terminal, and sending fourth information to the terminal; or directly sending the fourth information to the terminal; wherein the third information includes at least one of the following: broadcast indication or information of supporting a network slice group by the terminal, network slice identification information, network slice selection assistance information, single network slice selection assistance information, and indication or information of supporting a slice priority by the terminal; and
The fourth information includes at least one of the following: network slice identification information, network slice selection assistance information, single network slice selection assistance information, network slice group information, a network slice group identifier, and network slice priority information.

Optionally, the third information further includes: pre-configured slice priority information.

In an implementation of the present disclosure, the third information is information used to access a network or is handover request information or is configuration update information.

In an implementation of the present disclosure, directly sending the fourth information to the terminal includes:
directly sending the fourth information to the terminal when network configuration changes, or a position of the terminal changes, or subscription data changes, where the fourth information is used to update configuration of the terminal.

In an implementation of the present disclosure, receiving the third information sent by the terminal includes:
receiving, by a base station, the third information sent by the terminal.

In an implementation of the present disclosure, the method further includes:
determining the fourth information according to one or more of network slice information subscribed by the network function, network slice information allowed to be accessed by the network function, the second information, slice information configured by the network function, and slice group information of the network function.

In the embodiments of the present disclosure, the network function may confirm the slice identification information and the slice group information broadcast by the base station, and configure the slice identification information and the slice group information confirmed by the network function to the terminal. When the terminal subscribes a slice or the terminal is allowed to access a slice, the network function confirms the slice priority configured by the terminal and sends the slice priority to the terminal. After the foregoing information is configured to the terminal, the terminal may effectively listen to a broadcast from the base station and reside in an appropriate frequency or a frequency where a suitable slice exists when the terminal is in an idle state or a non-connected state, thereby reducing the possibility of perhaps cell reselection, and saving signaling.

Referring to FIG. 2, an embodiment of the present disclosure provides an information processing method, an entity of performing the method includes a base station, and the method include a step 201.

Step 201: sending first information to a network function and receiving second information from the network function; or receiving the second information directly from a network function; wherein the first information includes at least one of the following: network slice identification information, network slice selection assistance information, single network slice selection assistance information, and broadcast indication or information of supporting a network slice group by a base station; the second information includes at least one of the following: network slice identification information, network slice selection assistance information, single network slice selection assistance information, network slice group information, and a network slice group identifier.

In this way, supporting the slice capability by both the network function and the base station should be consistent.

In an implementation of the present disclosure, the method further includes: receiving correspondence between a network slice group identifier and network slice identification information from the network function.

In an implementation of the present disclosure, the method further includes: broadcasting slice group identification information according to the second information, where the slice group identification information is used to assist the terminal in camping on an appropriate frequency band or a suitable network slice.

In an implementation of the present disclosure, the network function includes at least one of the following: an access and mobility management function, a unified data management function, and a network slice access control function.

In the embodiments of the present disclosure, the network function may confirm the slice identification information and the slice group information broadcast by the base station, and configure the slice identification information and the slice group information confirmed by the network function to the terminal. When the terminal subscribes a slice or the terminal is allowed to access a slice, the network function confirms the slice priority configured by the terminal and sends the slice priority to the terminal. After the foregoing information is configured to the terminal, the terminal may effectively listen to a broadcast from the base station and reside in an appropriate frequency or a frequency where a suitable slice exists when the terminal is in an idle state or a non-connected state, thereby reducing the possibility of perhaps cell reselection, and saving signaling.

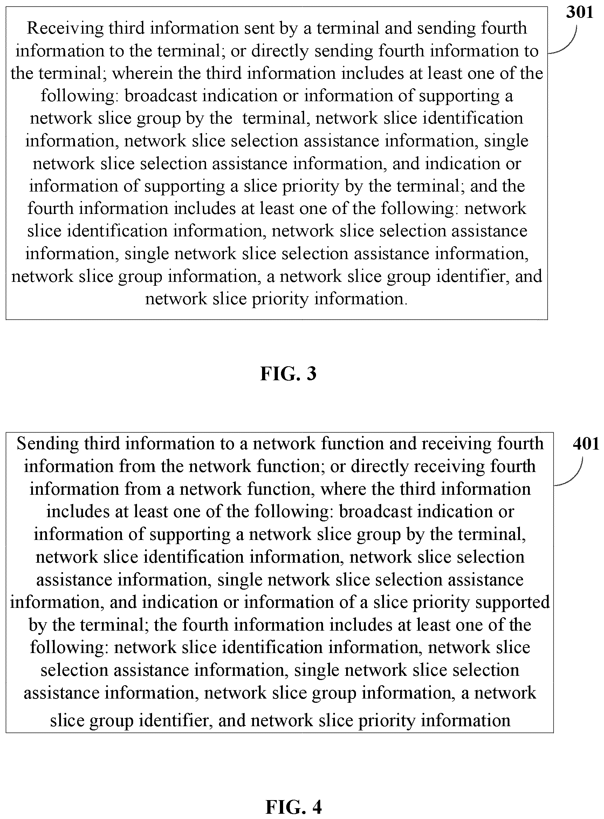

Referring to FIG. 3, an embodiment of the present disclosure provides an information processing method, an entity of performing the method includes a network function. The method includes a step 301.

Step 301: receiving third information sent by a terminal and sending fourth information to the terminal; or directly sending fourth information to the terminal; wherein the third information includes at least one of the following: broadcast indication or information of supporting a network slice group by the terminal, network slice identification information, network slice selection assistance information, single network slice selection assistance information, and indication or information of supporting a slice priority by the terminal; and the fourth information includes at least one of the following: network slice identification information, network slice selection assistance information, single network slice selection assistance information, network slice group information, a network slice group identifier, and network slice priority information.

In this way, supporting the slice capability by both the terminal and the core network needs to be consistent, and the slice priority configured by the terminal and the slice information broadcast by the base station are consistent with the capability of the core network, and further needs to be consistent with the subscription information of the terminal.

Optionally, the third information further includes pre-configured slice priority information.

In an implementation of the present disclosure, the third information is information used to access a network or handover request information or configuration update information.

In an implementation of the present disclosure, directly sending the fourth information to the terminal includes: directly sending fourth information to the terminal when network configuration changes, or a position of the terminal changes, or subscription data changes, where the fourth information is used to update configuration of the terminal.

In an implementation of the present disclosure, receiving the third information sent by the terminal includes: receiving, via a base station, the third information sent by the terminal.

In an implementation of the present disclosure, the method further includes: determining the fourth information according to one or more of information of a network slice subscribed by the network function, information of a network slice allowed to be accessed by the network function, second information, slice information configured by the network function, and slice group information of the network function;
the second information includes at least one of the following: network slice identification information, network slice selection assistance information, single network slice selection assistance information, network slice group information, and a network slice group identifier.

In an implementation of the present disclosure, the method further includes:
determining correspondence between a network slice group identifier and network slice identification information corresponding to the terminal; and
sending the correspondence between the network slice group identifier and the network slice identification information corresponding to the terminal to the terminal.

In an implementation of the present disclosure, determining the correspondence between the network slice group identifier and the network slice identification information corresponding to the terminal includes:
determining, according to the correspondence between the network slice group identifier and the network slice identification information determined by the network function and the network slice capability supported by the terminal, the correspondence between the network slice group identifier and the network slice identification information corresponding to the terminal; wherein the correspondence between the network slice group identifier and the network slice identification information determined by the network function is determined by the network function based on the network slice capability supported by the network function and the network slice capability supported by the base station.

In an implementation of the present disclosure, the network function includes at least one of the following: an access and mobility management function, a unified data management function, and a network slice access control function.

In the embodiments of the present disclosure, the network function may confirm the slice identification information and the slice group information broadcast by the base station, and configure to the terminal the slice identification information and the slice group information confirmed by the network function. When the terminal subscribes a slice or the terminal is allowed to access the slice, the network function confirms the slice priority configured for the terminal and sends the slice priority to the terminal. After the foregoing information is configured to the terminal, the terminal may effectively monitor the broadcast of the base station and reside in an appropriate frequency or a frequency where a suitable slice exists in an idle state or a non-connected state, thereby reducing the possibility of cell reselection, and saving signaling.

Referring to FIG. 4, an embodiment of the present disclosure provides an information processing method, an entity of performing the method includes a terminal, and the method includes a step 401.

Step 401: sending third information to a network function and receiving fourth information from the network function; or directly receiving fourth information from a network function.

The third information includes at least one of the following: broadcast indication or information of supporting a network slice group by the terminal, network slice identification information, network slice selection assistance information, single network slice selection assistance information, and indication or information of a slice priority supported by the terminal.

The fourth information includes at least one of the following: network slice identification information, network slice selection assistance information, single network slice selection assistance information, network slice group information, a network slice group identifier, and network slice priority information.

Optionally, the third information further includes pre-configured slice priority information.

In an implementation of the present disclosure, the third information is information used to access a network or handover request information or configuration update information.

In an implementation of the present disclosure, the method further includes:
receiving, from the network function, correspondence between a network slice group identifier and network slice identification information corresponding to the terminal.

In an implementation of the present disclosure, the network function includes at least one of the following: an access and mobility management function, a unified data management function, and a network slice access control function.

In an implementation of the present disclosure, the method further includes:
after receiving the fourth information from the network function, updating a slice priority preconfigured for the terminal, or subsequently selecting a network slice with a high priority to access a corresponding network.

In the embodiments of the present disclosure, the network function may confirm the slice identification information and the slice group information broadcast by the base station, and configure, to the terminal, the slice identification information and the slice group information confirmed by the network function. When the terminal subscribes a slice or the terminal is allowed to access a network, the network function confirms the slice priority configured for the terminal and sends the slice priority to the terminal. After the foregoing information is configured to the terminal, the terminal may be effectively monitor the broadcast of the base station and reside in an appropriate frequency or a frequency where a suitable slice exists in an idle state or a non-connected state, thereby reducing the possibility of cell reselection, and saving signaling.

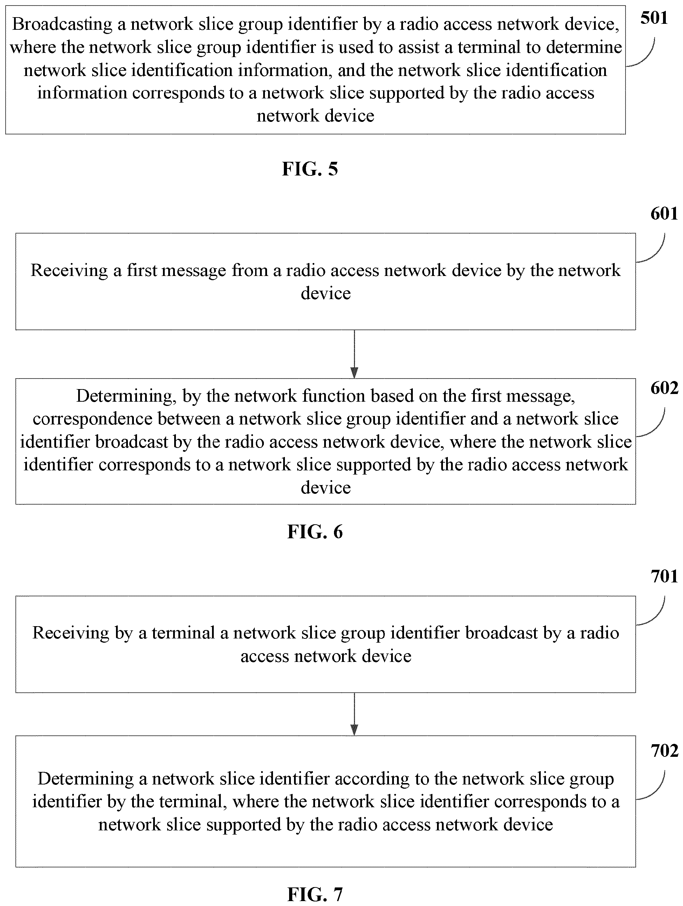

Referring to FIG. 5, an embodiment of the present disclosure provides an information processing method. The method includes a step 501.

Step 501: broadcasting a network slice group identifier by a radio access network device, where the network slice group identifier is used to assist a terminal to determine network slice identification information, and the network slice identification information corresponds to a network slice supported by the radio access network device.

The radio access network device may include a Next Generation Radio Access Network (NG-RAN) side device or a base station. The group identifier is a group identifier (group ID), and it should be noted that the network slice group may also be referred to as a network slice access stratum group, that is, the network slice group identifier may also be referred to as a network slice access stratum group identifier.

It should be noted that the network slice group identifier may be converted into a network slice ID at the terminal side, so that the terminal senses the network slice supported by the radio access network device.

The network slice identifier may also be described as network slice identification information, and the network slice identification information includes a network slice identifier and other information related to the network slice identifier.

In an implementation of the present disclosure, the method further includes:
sending a first message to a network function by the radio access network device, where the first message is used to assist the network function to determine correspondence between a network slice group identifier and a network slice identifier, so that a capability of a network function is consistent with the correspondence between the network slice group identifier and the network slice identifier.

The first message may be an NG_setup message or an N2 message.

The network function may also be described as a core network function or a 5G core network function, and the network function may include: an Access and Mobility Management Function (AMF) or another Network Function (NF), and the another NF includes a Unified Data Management (UDM), a Network Slice Admission Control Function (NSACF), or the like.

In an implementation of the present disclosure, the first message includes one or more of the following:
(1) fifth information, where the fifth information indicates that the radio access network device supports broadcasting of a network slice group identifier; it may be understood that the network function may know, by using the fifth information, that the radio access network device has a capability of supporting the broadcasting of a network slice group identifier;
(2) a network slice identifier supported by the radio access network device; and
(3) a network slice group identifier corresponding to a network slice identifier supported by the radio access network device.

In an implementation of the present disclosure, the method further includes:
receiving, by the radio access network device from the network function, the correspondence between a network slice group identifier and a network slice identifier determined by the network function, so that an understanding of the correspondence between the group identifier and the network slice identifier by the radio access network device and the network function remains consistent.

For example, the radio access network device receives a correspondence between a group identifier and a network slice identifier determined by the network function from the network function by using a first response message, and optionally, the first response message may be a response message for a setup message (NG_setup message) or another message.

In the embodiments of the present disclosure, the terminal may determine, by using the network slice group identifier broadcast by the radio access network device, the network slice supported by the radio access network device, so that the terminal knows the capability of the radio access network device in which the terminal camps on, and avoids the problem of subsequent reselection and signaling waste at the RAN side due to the fact that the terminal does not know the capability of the radio access network device in which the terminal camps on.

Referring to FIG. 6, an embodiment of the present disclosure provides an information processing method. The method includes steps 601 and 602.

Step 601: receiving a first message from a radio access network device by the network device;

Step 602: determining, by the network function based on the first message, correspondence between a network slice group identifier and a network slice identifier broadcast by the radio access network device, where the network slice identifier corresponds to a network slice supported by the radio access network device.

In an implementation of the present disclosure, the first message includes one or more of the following:
(1) fifth information, where the fifth information indicates that the radio access network device supports broadcasting of a network slice group identifier; it may be understood that the network function may know, by using the first information, that the radio access network device has a capability of supporting the broadcasting of a network slice group identifier;
(2) a network slice identifier supported by the radio access network device; and
(3) a network slice group identifier corresponding to a network slice identifier supported by the radio access network device.

In an implementation of the present disclosure, determining, by the network function based on the first message, the correspondence between the network slice group identifier and a network slice identifier broadcast by the radio access network device includes:
determining the correspondence between the group identifier and the network slice identifier by the network function, based on the network slice identifier supported by the network function, the network slice identifier supported by the radio access network device, and/or the network slice group identifier corresponding to the network slice identifier supported by the radio access network device.

In an implementation of the present disclosure, the method further includes:
sending the correspondence between the network slice group identifier and the network slice identifier to the radio access network device by the network function, so that the radio access network device and the network function remain consistent for understanding of the correspondence between the network slice group identifier and the network slice identifier.

In an implementation of the present disclosure, the method further includes:
determining the correspondence between the network slice group identifier and the network slice identifier corresponding to the terminal according to the correspondence between the network slice group identifier and the network slice identifier and according to the network slice identifier supported by the terminal, so that the terminal capability is consistent with the correspondence between the network slice group identifier and the network slice identifier.

Optionally, the network slice identifier supported by the terminal may include allowed (Allowed) Network Slice Selection Assistance Information (NSSAI) information.

In an implementation of the present disclosure, the method further includes:
sending the correspondence between the network slice group identifier and the network slice identifier corresponding to the terminal by the network function to the terminal, so that the network function and the terminal keep consistent with understanding of the correspondence between the network slice group identifier and the network slice identifier.

In a moving state of a User Equipment (UE), the correspondences between the network slice group identifier and the network slice identifier configured at the radio access network side for the UE in different Tracking Areas (TAs)/Routing Areas (RAs) are different, and in a moving process, the UE needs to update the correspondence between a network slice group identifier and a network slice identifier. In an implementation of the present disclosure, the method further includes:
sending, by the network function, the updated correspondence between the network slice group identifier and the network slice identifier corresponding to the terminal to the terminal by using a registration update procedure, or by using a Configuration Update procedure of the terminal.

In an implementation of the present disclosure, the method further includes:
receiving, by the network function, sixth information from the terminal, where the sixth information indicates that the terminal supports a broadcast network slice group identifier, that is, the terminal notifies, by using the sixth information, the network function that the terminal has a capability of receiving a network slice group identifier broadcast by a radio access network device.

In this embodiment of the present disclosure, the network function may negotiate, with the radio access network device, the correspondence between the network slice group identifier and the network slice identifier broadcast by the radio access network device, so that the correspondence between the network slice group identifier and the network slice identifier is consistent with the capability of the network function and the capability of the radio access network device.

Referring to FIG. 7, an embodiment of the present disclosure provides an information processing method. The method includes steps 701 and 702.

Step 701: receiving by a terminal a network slice group identifier broadcast by a radio access network device.

Step 702: determining a network slice identifier according to the network slice group identifier by the terminal, where the network slice identifier corresponds to a network slice supported by the radio access network device.

In an implementation of the present disclosure, the method further includes:
receiving, by the terminal, correspondence between a network slice group identifier and a network slice identifier corresponding to the terminal from a network function.

In an implementation of the present disclosure, the method further includes:
receiving, by the terminal, the updated correspondence between the network slice group identifier and the network slice identifier corresponding to the terminal from the network function through a registration update procedure or through a configuration update procedure of the terminal.

In the embodiments of the present disclosure, the terminal may determine, by using the group identifier broadcast by the radio access network device, the network slice supported by the radio access network device, so that the terminal knows the capability of the radio access network device on which the terminal camps, and avoids the problem of subsequent RAN reselection and signaling waste due to the fact that the terminal does not know the capability of camping on the radio access network device.

Embodiments of the present disclosure are described below with reference to Embodiment 1 and Embodiment 2.

Embodiment 1: a RAN side initial configuration procedure and a UE registration procedure.

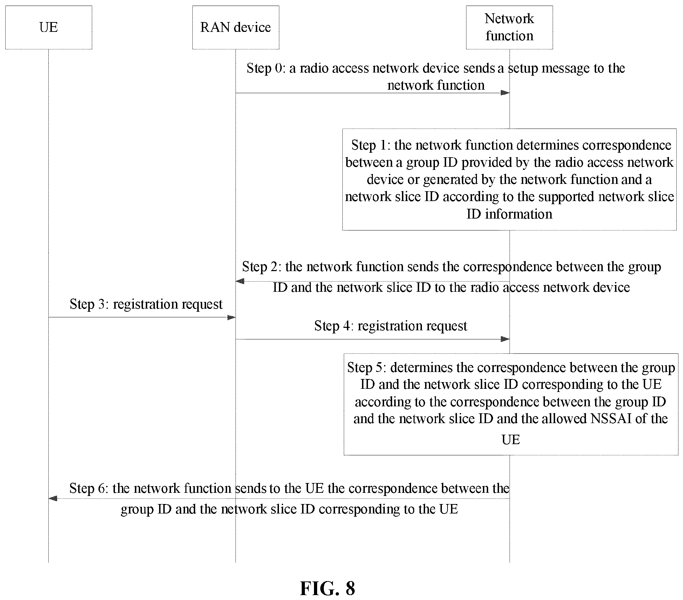

Step 0 to step 2 in FIG. 8 are RAN side configuration procedures. Step 3 to step 6 are UE registration procedures.

Step 0: the radio access network device sends the first message to the network function.

The radio access network device may include: an NG-RAN side device or a base station;
The network function may include: an AMF or another NF, where the another NF includes a UDM, an NSACF, or the like.

The first message may be a setup message (NG_setup message) or an N2 interface message (N2 message), and the first message may include one or more of the following: (1) indication information that the radio access network device supports broadcasting a group ID, (2) the network slice ID supported by the radio access network device, and (3) the correspondence between the group ID and the network slice ID configured by the radio access network device.

After receiving the group ID broadcast by the radio access network device, the UE may determine the slice ID based on the group ID, so that the UE senses the network slice supported by the radio access network device.

The slice ID herein may also be described as Single Network Slice Selection Assistance Information (S-NSSAI) or NSSAI.

Step 1: the network function determines the correspondence between the group ID and the network slice ID according to the network slice ID configured locally (or described as itself), the network slice ID provided by the radio access network device, and the group ID provided by the radio access network device.

In step 1, the network function negotiates the available correspondence between a group ID and a slice ID with a radio access network device.

Step 2: the network function sends the correspondence between the group ID and the network slice ID to the radio access network device.

**Table 1: Correspondence between group ID and network slice ID.**

| Correspondence between Group ID and S-NSSAI | Description |
|---|---|
| Group ID | This Group ID may be sent to the NG-RAN for broadcast |
| One or more S-NSSAIs or NSSAI | One or more S-NSSAIs or NSSAI correspond to Group ID |

Steps 3-4: the UE initiates a registration procedure.

Optionally, a registration request may carry indication information that the UE supports broadcasting the group ID by the radio access network device.

Step 5: the network function determines the correspondence between the group ID and the network slice ID corresponding to the UE according to the correspondence between the group ID and the network slice ID and the allowed NSSAI of the UE.

Step 6: the network function sends the correspondence between the group ID and the network slice ID corresponding to the UE to the UE.

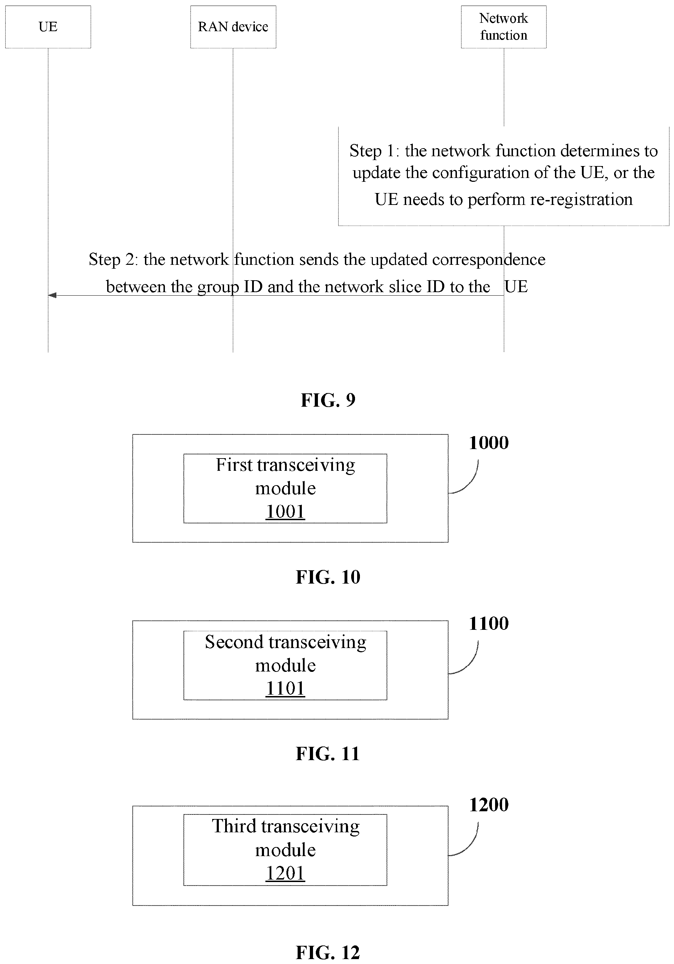

Embodiment 2: the moving state of the UE, referring to FIG. 9, the specific steps are as follows.

Step 1: In the moving state of the UE, the network function determines to update the configuration of the UE, or the UE needs to start the registration process due to re-registration (periodic registration or re-registration) of the UE.

Step 2: the network function sends the updated correspondence between the group ID and the network slice ID to the UE. A configuration update procedure of the UE may be adopted.

Referring to FIG. 10, an embodiment of the present disclosure provides an information processing device applied to a network function, and the device 1000 includes:
a first transceiving module 1001, configured to receive first information sent by a base station and send second information to the base station; or directly send second information to a base station; wherein the first information includes at least one of following: network slice identification information, network slice selection assistance information, single network slice selection assistance information, and broadcast indication or information of supporting a network slice group by the base station; the second information includes at least one of the following: network slice identification information, network slice selection assistance information, single network slice selection assistance information, network slice group information, and a network slice group identifier.

In an implementation of the present disclosure, the network function includes at least one of the following: an access and mobility management function, a unified data management function, and a network slice access control function.

In an implementation of the present disclosure, the device further includes:
a first determining module, configured to determine the second information according to one or more of a network slice capability supported by the network function, network slice information configured by the network function, and network slice group information configured by the network function.

In an implementation of the present disclosure, the first transceiving module 1001 is further configured to, when network configuration changes, directly send the second information to the base station, wherein the second information is used to update configuration of the base station.

In an implementation of the present disclosure, the first transceiving module 1001 is further configured to determine correspondence between a network slice group identifier and network slice identification information; and send the correspondence between the network slice group identifier and the network slice identification information to the base station.

In an implementation of the present disclosure, the first transceiving module 1001 is further configured to: determine the correspondence between the network slice group identifier and the network slice identification information according to the network slice capability supported by the network function and the network slice capability supported by the base station.

The device provided in the embodiments of the present disclosure can implement each process implemented by the method embodiment shown in FIG. 1, and achieve the same technical effect, which will not be repeated here to avoid repetition.

Referring to FIG. 11, an embodiment of the present disclosure provides an information processing device applied to a base station, and the device 1100 includes:
a second transceiving module 1101, configured to send first information to a network function and receive second information from the network function; or receive the second information directly from a network function; wherein the first information includes at least one of the following: network slice identification information, network slice selection assistance information, single network slice selection assistance information, and broadcast indication or information of supporting a network slice group by a base station; the second information includes at least one of the following: network slice identification information, network slice selection assistance information, single network slice selection assistance information, network slice group information, and a network slice group identifier.

In an implementation of the present disclosure, the second transceiving module 1101 is further configured to: receive correspondence between a network slice group identifier and network slice identification information from the network function.

In an implementation of the present disclosure, the second transceiving module 1101 is further configured to broadcast slice group identification information according to the second information, where the slice group identification information is used to assist the terminal in camping on an appropriate frequency band or a suitable network slice.

In an implementation of the present disclosure, the network function includes at least one of the following: an access and mobility management function, a unified data management function, and a network slice access control function.

The device provided in the embodiments of the present disclosure can implement each process implemented by the method embodiment shown in FIG. 3, and achieve the same technical effect, which will not be repeated here to avoid repetition.

Referring to FIG. 12, an embodiment of the present disclosure provides an information processing device applied to a network function, and the device 1200 includes:
a third transceiving module 1201, configured to receive third information sent by a terminal and send fourth information to the terminal; or directly send fourth information to the terminal; wherein the third information includes at least one of the following: broadcast indication or information of supporting a network slice group by the terminal, network slice identification information, network slice selection assistance information, single network slice selection assistance information, and indication or information of supporting a slice priority by the terminal; and the fourth information includes at least one of the following: network slice identification information, network slice selection assistance information, single network slice selection assistance information, network slice group information, a network slice group identifier, and network slice priority information.

Optionally, the third information further includes: pre-configured slice priority information.

In an implementation of the present disclosure, the third information is information used to access a network or handover request information or configuration update information.

In an implementation of the present disclosure, the third transceiving module 1201 is further configured to directly send fourth information to the terminal when network configuration changes, or a position of the terminal changes, or subscription data changes, where the fourth information is used to update configuration of the terminal.

In an implementation of the present disclosure, the third transceiving module 1201 is further configured to receive, via a base station, the third information sent by the terminal.

In an implementation of the present disclosure, the device further is configured to determine the fourth information according to one or more of information of a network slice subscribed by the network function, information of a network slice allowed to be accessed by the network function, second information, slice information configured by the network function, and slice group information of the network function.

In an implementation of the present disclosure, the third transceiving module 1201 is further configured to:
determine correspondence between a network slice group identifier and network slice identification information corresponding to the terminal; and
send the correspondence between the network slice group identifier and the network slice identification information corresponding to the terminal to the terminal.

In an implementation of the present disclosure, the third transceiving module 1201 is further configured to determine, according to the correspondence between the network slice group identifier and the network slice identification information determined by the network function and the network slice capability supported by the terminal, the correspondence between the network slice group identifier and the network slice identification information corresponding to the terminal; wherein the correspondence between the network slice group identifier and the network slice identification information determined by the network function is determined by the network function based on the network slice capability supported by the network function and the network slice capability supported by the base station.

In an implementation of the present disclosure, the network function includes at least one of the following: an access and mobility management function, a unified data management function, and a network slice access control function.

The device provided in the embodiments of the present disclosure can implement each process implemented by the method embodiment shown in FIG. 3, and achieve the same technical effect, which will not be repeated here to avoid repetition.

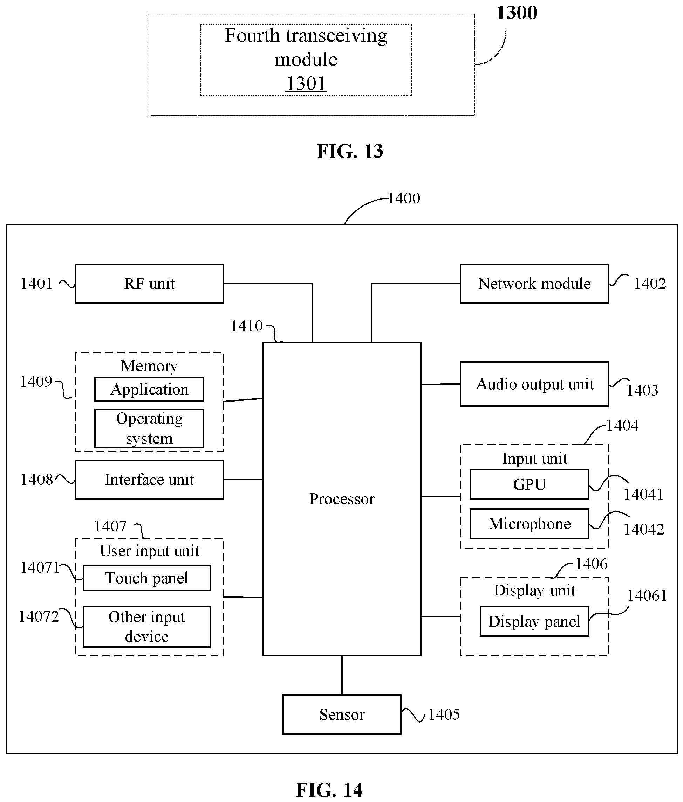

Referring to FIG. 13, an embodiment of the present disclosure provides an information processing device applied to a terminal, and the device 1300 includes:
a fourth transceiving module 1301, configured to send third information to a network function and receive fourth information from the network function; or directly receive fourth information from a network function.

The third information includes at least one of the following: broadcast indication or information of supporting a network slice group by the terminal, network slice identification information, network slice selection assistance information, single network slice selection assistance information, and indication or information of a slice priority supported by the terminal.

The fourth information includes at least one of the following: network slice identification information, network slice selection assistance information, single network slice selection assistance information, network slice group information, a network slice group identifier, and network slice priority information.

Optionally, the third information further includes pre-configured slice priority information.

In an implementation of the present disclosure, the third information is information used to access a network or handover request information or configuration update information.

In an implementation of the present disclosure, the fourth transceiver 1301 is further configured to receive, from the network function, correspondence between a network slice group identifier and network slice identification information corresponding to the terminal.

In an implementation of the present disclosure, the device further includes: a processing module configured to: after receiving the fourth information from the network function, update a slice priority preconfigured for the terminal, or subsequently select a network slice with a high priority to access a corresponding network.

In an implementation of the present disclosure, the network function includes at least one of the following: an access and mobility management function, a unified data management function, and a network slice access control function.

The device provided in the embodiments of the present disclosure can implement each process implemented by the method embodiment shown in FIG. 4, and achieve the same technical effect, which will not be repeated here to avoid repetition.

Specifically, FIG. 14 is a schematic diagram of a hardware structure of a terminal according to some embodiments of the present disclosure, and the terminal 1400 includes but is not limited to at least some of following: a radio frequency unit 1401, a network module 1402, an audio output unit 1403, an input unit 1404, a sensor 1405, a display unit 1406, a user input unit 1407, an interface unit 1408, a memory 1409, and a processor 1410.

A person skilled in the art may understand that the terminal 1400 may further include a power supply (for example, a battery) for supplying power to each component, and the power supply may be logically connected to the processor 1410 through the power management system, so as to implement functions such as charging, discharging, and power consumption management by using the power management system. The terminal structure shown in FIG. 14 does not constitute a limitation on the terminal, and the terminal may include more or fewer components than those shown in the figure, or combine some components, or different component arrangements, and details are not described herein again.

It should be understood that, in this embodiment of the present disclosure, the input unit 1404 may include a graphics processing unit (GPU) 14041 and a microphone 14042, and the graphics processor 14041 processes image data of a static picture or video obtained by an image capture device (such as a camera) in a video capture mode or an image capture mode. The display unit 1406 may include a display panel 14061, and the display panel 14061 may be configured in a form of a liquid crystal display, an organic light emitting diode, or the like. The user input unit 1407 includes a touch panel 14071 and another input device 14072. The touch panel 14071, which is also referred to as a touch screen, may include two parts: a touch detection device and a touch controller. The other input devices 14072 may include, but are not limited to, a physical keyboard, a function key (for example, a volume control key or a switch key), a trackball, a mouse, and an operating rod, and details are not described herein again.

In this embodiment of the present disclosure, after receiving downlink data from the network side device, the radio frequency unit 1401 processes the downlink data to the processor 1410; in addition, the radio frequency unit 1401 sends the uplink data to the network side device. Generally, the radio frequency unit 1401 includes but is not limited to an antenna, at least one amplifier, a transceiver, a coupler, a low noise amplifier, a duplexer, and the like.

The memory 1409 may be configured to store software programs or instructions and various data. The memory 1409 may mainly include a storage program or instruction area and a storage data area, where the storage program or instruction area may store an operating system, an application program or an instruction required by at least one function (for example, a sound playing function, an image playing function, and the like). In addition, the memory 1409 may include a high-speed random access memory, and may further include a non-transitory memory, where the non-transitory memory may be a Read-Only Memory (ROM), a programmable read-only memory (PROM), an erasable programmable read-only memory (EPROM), an Electrically Erasable Programmable Read Only Memory (Electrically EPROM, EEPROM), or flash memory. For example, at least one magnetic disk storage device, a flash memory device, or other non-transitory solid-state storage devices.

The processor 1410 may include one or more processing units; optionally, the processor 1410 may integrate an application processor and a modem processor, where the application processor mainly processes an operating system, a user interface, an application program, an instruction, and the like, and the modem processor mainly processes wireless communications, for example, a baseband processor. It may be understood that the modem processor may not be integrated into the processor 1410.

The terminal provided in the embodiments of the present disclosure can implement each process implemented by the method embodiment shown in FIG. 4, and achieve the same technical effect, which will not be repeated here to avoid repetition.

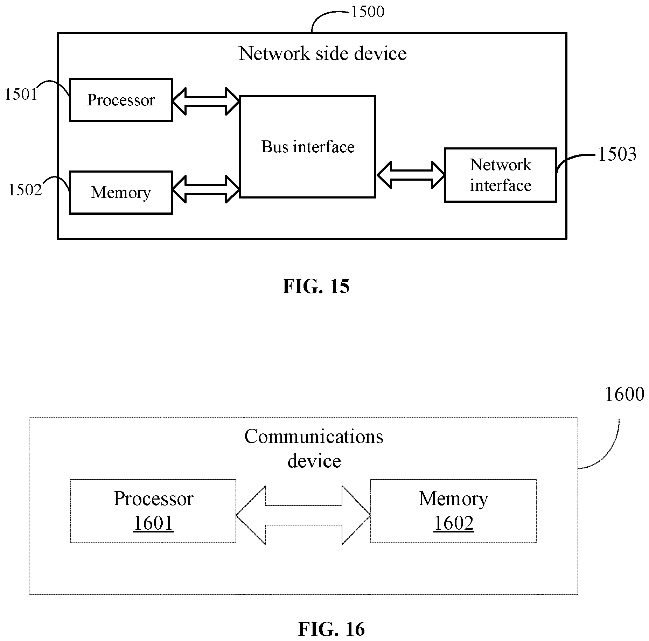

Specifically, an embodiment of the present disclosure further provides a network side device. As shown in FIG. 15, the network side device 1500 includes a processor 1501, a memory 1502, and a network interface 1503, where the interface is, for example, a common public radio interface (CPRI).

Specifically, the network side device in the embodiments of the present disclosure further includes an instruction or a program stored on the memory 1502 and executable on the processor 1501.

It may be understood that the processor 1501 invokes the instruction or the program in the memory 1502 to perform the method performed by each module shown in FIG. 10 to FIG. 14, and achieves the same technical effect, and in order to avoid repetition, details are not described herein again.

As shown in FIG. 16, an embodiment of the present disclosure further provides a communication device 1600, including a processor 1601, a memory 1602, a program or an instruction stored on the memory 1602 and executable on the processor 1601, and the program or the instruction, when executed by the processor 1601, implements the processes of the method embodiments in FIG. 1 or FIG. 2 or FIG. 3 or FIG. 4, and can achieve the same technical effect. To avoid repetition, details are not described herein again.

An embodiment of the present disclosure further provides a readable storage medium, the readable storage medium stores a program or an instruction, and when the program or the instruction is executed by the processor, each process of the method embodiment shown in FIG. 1 or FIG. 2 or FIG. 3 or FIG. 4 is implemented, and the same technical effect can be achieved, and details are not described herein again to avoid repetition.

The processor is a processor in the terminal in the foregoing embodiment. The readable storage medium includes a computer-readable storage medium, such as a computer read-only memory (ROM), a random access memory (RAM), a magnetic disk, an optical disk, or the like.

The steps of the method or algorithm described with reference to the content disclosed in the present disclosure may be implemented by hardware, or may be implemented in a manner of executing a software instruction by a processor. The software instructions may be composed of corresponding software modules, which may be stored in RAM, flash memory, ROM, EPROM, EEPROM, registers, a hard disk, a removable hard disk, a read-only optical disk, or any other form of storage medium well known in the art. An exemplary storage medium is coupled to the processor such that the processor can read information from, and write information to, the storage medium. Certainly, the storage medium may also be a component of the processor. The processor and the storage medium may be carried in an ASIC. In addition, the ASIC may be carried in a core network interface device. Certainly, the processor and the storage medium may exist in the core network interface device as discrete components.

A person skilled in the art should be aware that in the foregoing one or more examples, the functions described in the present disclosure may be implemented by hardware, software, firmware, or any combination thereof. When implemented in software, these functions may be stored in a computer-readable medium or transmitted as one or more instructions or code on a computer-readable medium. Computer-readable media include both computer storage media and communication media including any medium that facilitates transfer of a computer program from one place to another. The storage medium may be any available medium that can be accessed by a general-purpose or special-purpose computer.

It should be understood that the foregoing descriptions are merely specific implementations of the present disclosure and are not intended to limit the protection scope of the present disclosure, and any modifications, equivalent replacements, improvements and the like made based on the technical solutions of the present disclosure shall fall within the protection scope of the present disclosure.

A person skilled in the art should understand that the embodiments of the present disclosure may be provided as a method, a system, or a computer program product. Therefore, the embodiments of the present disclosure may use a form of hardware only embodiments, software only embodiments, or embodiments with a combination of software and hardware. Moreover, the embodiments of the present disclosure may take the form of a computer program product implemented on one or more computer-usable storage media (including but not limited to a disk memory, a CD-ROM, an optical memory, etc.) including computer-usable program codes.

The embodiments of the present disclosure are described with reference to the flowcharts and/or block diagrams of the method, the device (system), and the computer program product according to the embodiments of the present disclosure. It should be understood that computer program instructions may be used to implement each process and/or each block in the flowcharts and/or the block diagrams, and a combination of a process and/or a block in the flowcharts and/or the block diagrams. These computer program instructions may be provided to a processor of a general-purpose computer, a special-purpose computer, an embedded processor, or another programmable data processing device to produce a machine, such that the instructions executed by the processor of the computer or other programmable data processing device generate means for implementing the functions specified in one or more flows of the flow chart and/or one or more blocks of the block diagram.

These computer program instructions may also be stored in a computer-readable memory that can direct a computer or other programmable data processing device to operate in a particular manner, such that the instructions stored in the computer-readable memory generate an article of manufacture including an instruction device that implements the functions specified in one or more flows of the flow chart and/or one or more blocks of the block diagram.

These computer program instructions may also be loaded onto a computer or other programmable data processing device such that a series of operational steps are performed on the computer or other programmable device to produce a computer-implemented process, such that the instructions executed on the computer or other programmable device provide steps for implementing the functions specified in one or more flows of the flowchart and/or one or more blocks of the block diagram.

Obviously, those skilled in the art can make various modifications and variations to the embodiments of the present disclosure without departing from the spirit and scope of the present disclosure. In this way, if these modifications and variations of the embodiments of the present disclosure fall within the scope of the claims of the present disclosure and their equivalent technologies, the present disclosure is also intended to include these modifications and variations.

## Claims

1. An information processing method performed by a network function and comprising:
receiving first information sent by a base station and sending second information to the base station, or directly sending second information to a base station;
wherein the first information comprises at least one of following:
network slice identification information, network slice selection assistance information, single network slice selection assistance information, broadcast indication or information of supporting a network slice group by the base station;
the second information comprises at least one of following:
network slice identification information, network slice selection assistance information, single network slice selection assistance information, network slice group information, a network slice group identifier.

2. The method according to claim 1, wherein the network function comprises at least one of following:
an access and mobility management function, a unified data management function, a network slice access control function.

3. The method according to claim 1, further comprising:
determining the second information according to one or more of following:
a network slice capability supported by the network function, network slice information configured by the network function, network slice group information configured by the network function.

4. The method according to claim 1, wherein directly sending the second information to the base station comprises:
in a case that network configuration changes, directly sending the second information to the base station, wherein the second information is used to update configuration of the base station.

5. The method according to claim 1, further comprising:
determining correspondence between a network slice group identifier and network slice identification information;
sending the correspondence between the network slice group identifier and the network slice identification information to the base station.

6. The method according to claim 5, wherein determining the correspondence between the network slice group identifier and the network slice identification information comprises:
determining the correspondence between the network slice group identifier and the network slice identification information according to a network slice capability supported by the network function and a capability of a network slice supported by the base station.

7. An information processing method performed by a base station, comprising:
sending first information to a network function and receiving second information from the network function; or receiving second information directly from a network function;
wherein the first information comprises at least one of following:
network slice identification information, network slice selection assistance information, single network slice selection assistance information, broadcast indication or information of supporting a network slice group by a base station;
the second information comprises at least one of following:
network slice identification information, network slice selection assistance information, single network slice selection assistance information, network slice group information, a network slice group identifier.

8. The method according to claim 7, further comprising:
receiving, from the network function, correspondence between a network slice group identifier and network slice identification information.

9. The method according to claim 7, wherein the network function comprises at least one of following:
an access and mobility management function, a unified data management function, a network slice access control function.

10. The method according to claim 7, further comprising:
broadcasting slice group identification information according to the second information, wherein the slice group identification information is used to assist the terminal in camping on an appropriate frequency band or a suitable network slice.

11. An information processing method performed by a network function and comprising:
receiving third information sent by a terminal and sending fourth information to the terminal; or directly sending fourth information to the terminal;
wherein the third information comprises at least one of following: broadcast indication or information of supporting a network slice group by the terminal, network slice identification information, network slice selection assistance information, single network slice selection assistance information, indication or information of supporting a slice priority by the terminal;
the fourth information comprises at least one of following: network slice identification information, network slice selection assistance information, single network slice selection assistance information, network slice group information, a network slice group identifier, network slice priority information.

12. The method according to claim 11, wherein the third information is information used to access a network or handover request information or configuration update information.

13. The method according to claim 11, wherein directly sending the fourth information to the terminal comprises:
directly sending fourth information to the terminal when network configuration changes, or a position of the terminal changes, or subscription data changes, where the fourth information is used to update configuration of the terminal.

14. The method according to claim 11, wherein receiving the third information sent by the terminal comprises:
receiving, via a base station, the third information sent by the terminal.

15. The method according to claim 11, further comprising:
determining the fourth information according to one or more of following: information of a network slice subscribed by the network function, information of a network slice allowed to be accessed by the network function, second information, slice information configured by the network function, slice group information of the network function;
wherein the second information comprises at least one of following: network slice identification information, network slice selection assistance information, single network slice selection assistance information, network slice group information, a network slice group identifier.

16. The method according to claim 11, further comprising:
determining correspondence between a network slice group identifier and network slice identification information corresponding to the terminal; and
sending, to the terminal, the correspondence between the network slice group identifier and the network slice identification information corresponding to the terminal.

17. The method according to claim 16, wherein determining the correspondence between the network slice group identifier and the network slice identification information corresponding to the terminal comprises:
determining, according to the correspondence between the network slice group identifier and the network slice identification information determined by the network function and network slice capability supported by the terminal, the correspondence between the network slice group identifier and the network slice identification information corresponding to the terminal;
wherein the correspondence between the network slice group identifier and the network slice identification information determined by the network function is determined by the network function based on network slice capability supported by the network function and network slice capability supported by the base station.

18. The method according to claim 11, wherein the network function comprises at least one of following:
an access and mobility management function, a unified data management function, a network slice access control function.

19. An information processing method performed by a terminal and comprising:
sending third information to a network function and receiving fourth information from the network function; or directly receiving fourth information from a network function,
wherein the third information comprises at least one of following: broadcast indication or information of supporting a network slice group by the terminal, network slice identification information, network slice selection assistance information, single network slice selection assistance information, indication or information of a slice priority supported by the terminal;
the fourth information comprises at least one of following:
network slice identification information, network slice selection assistance information, single network slice selection assistance information, network slice group information, a network slice group identifier, network slice priority information.

20. The method according to claim 19, wherein the third information further comprises pre-configured slice priority information.

21. The method according to claim 19, wherein the third information is information used to access a network or handover request information or configuration update information.

22. The method according to claim 19, further comprising:
receiving, from the network function, correspondence between a network slice group identifier and network slice identification information corresponding to the terminal.

23. The method according to claim 19, wherein the network function comprises at least one of following:
an access and mobility management function, a unified data management function, a network slice access control function.

24. The method according to claim 19, further comprising:
after receiving fourth information from the network function, updating a slice priority preconfigured for the terminal, or subsequently selecting a network slice with a high priority to access a corresponding network.

25. An information processing device performed by a network function and comprising:
a first transceiving module 1001 configured to receive first information sent by a base station and send second information to the base station; or directly send second information to a base station;
wherein the first information comprises at least one of following: network slice identification information, network slice selection assistance information, single network slice selection assistance information, broadcast indication or information of supporting a network slice group by the base station;
the second information comprises at least one of following: network slice identification information, network slice selection assistance information, single network slice selection assistance information, network slice group information, a network slice group identifier.

26. An information processing device applied to a base station and comprising:
a second transceiving module, configured to send first information to a network function and receive second information from the network function; or receive the second information directly from a network function;
wherein the first information comprises at least one of following: network slice identification information, network slice selection assistance information, single network slice selection assistance information, broadcast indication or information of supporting a network slice group by a base station;
the second information comprises at least one of following: network slice identification information, network slice selection assistance information, single network slice selection assistance information, network slice group information, a network slice group identifier.

27. An information processing device applied to a network function and comprising:
a third transceiving module, configured to receive third information sent by a terminal and send fourth information to the terminal; or directly send fourth information to the terminal;
wherein the third information comprises at least one of following:
broadcast indication or information of supporting a network slice group by the terminal, network slice identification information, network slice selection assistance information, single network slice selection assistance information, indication or information of supporting a slice priority by the terminal;
the fourth information comprises at least one of following: network slice identification information, network slice selection assistance information, single network slice selection assistance information, network slice group information, a network slice group identifier, network slice priority information.

28. An information processing device applied to a terminal and comprising:
a fourth transceiving module, configured to send third information to a network function and receive fourth information from the network function; or directly receive fourth information from a network function;
wherein the third information comprises at least one of following: broadcast indication or information of supporting a network slice group by the terminal, network slice identification information, network slice selection assistance information, single network slice selection assistance information, indication or information of a slice priority supported by the terminal;
the fourth information comprises at least one of following: network slice identification information, network slice selection assistance information, single network slice selection assistance information, network slice group information, a network slice group identifier, network slice priority information.

29. A communications device, comprising:
a processor, a memory, and a program stored in the memory and executable on the processor, wherein the program, when executed by the processor, implements the steps of the method according to any one of claims 1 to 24.

30. A readable storage medium having a program stored thereon, wherein the program, when executed by a processor, implements the steps of the method according to any one of claims 1 to 24.
